Europäisches Patentamt

European Patent Office

Office européen des brevets

(11) Numéro de publication: **0 187 555**
A1

# (12) DEMANDE DE BREVET EUROPEEN

(21) Numéro de dépôt: 85402210.0

(22) Date de dépôt: 15.11.85

(51) Int. Cl.⁴: **B 23 K 1/08**

(30) Priorité: 15.11.84 FR 8417448

(43) Date de publication de la demande:
16.07.86 Bulletin 86/29

(84) Etats contractants désignés:
AT BE CH DE GB IT LI LU NL SE

(71) Demandeur: OUTILLAGES SCIENTIFIQUES ET DE
LABORATOIRES O.S.L. S.A.
Z.I. Carros - 2e Casier - Lot R
F-06510 Carros Industries(FR)

(72) Inventeur: Simonetti, Jean-Pierre
18, allée de Chanteraine
F-91190 Gif/Yvette(FR)

(74) Mandataire: Levesque, Denys et al,
Cabinet Beau de Loménie 55, rue d'Amsterdam
F-75008 Paris(FR)

(54) **Machine de soudage à la vague.**

(57) L'invention concerne un dispositif (1) de génération d'une vague de soudure (6) pour machine de soudage à la vague de composants disposés sur des circuits imprimés défilant suivant un chemin ascendant (7). Ce dispositif comprend une buse (12) réglable au moyen d'une came (14), un plateau aval (18) réglable au moyen d'une came (19) et un volet amount (21) réglable au moyen d'une came (24). Tous les réglages sont réalisables alors que la machine est en fonctionnement.

EP 0 187 555 A1

Fig-1

TITRE MODIFIE
voir page de garde

1                    **0187555**

## DISPOSITIF REGLABLE DE GENERATION D'UNE VAGUE DE SOUDURE
## POUR MACHINE DE SOUDAGE A LA VAGUE.

La présente invention se rapporte à un dispositif de génération d'une vague de soudure pour machine de soudage à la vague de composants disposés sur des circuits imprimés supports défilant à travers la machine, ce dispositif étant équipé d'une buse qui comprend une chambre de forme allongée à parois convergentes et une bouche s'ouvrant à son sommet et s'étendant au-dessous du chemin de défilement des circuits imprimés, sur toute la largeur de celui-ci, cette buse, reliée à un bac d'alimentation en soudure liquide, étant susceptible d'émettre un courant ascendant de soudure formant une vague qui vient lécher la face inférieure des circuits imprimés et les queues de composants qui en font saillie.

En raison des nombreux avantages qu'il offre, le procédé de soudage à la vague dynamique des composants sur des circuits imprimés a pris une importance croissante dans l'industrie électronique. Toutefois, malgré les perfectionnements qu'ont reçus les machines de soudage à la vague, leur rendement de fabrication est souvent inférieur à 100%, de sorte que les produits obtenus doivent être soigneusement vérifiés en vue de détecter les défauts qu'ils peuvent comporter (excès de soudure susceptibles de créer des ponts intempestifs et, inversement, manques de soudure laissant des composants non soudés), et d'y remédier par des retouches faites à la main, ce qui est long et dispendieux.

La présente invention a pour but d'améliorer la fiabilité de fabrication dans le procédé de soudage à la vague en permettant de modeler à volonté, de façon précise, la forme de la vague dans chaque cas particulier.

A cet effet, il est prévu selon l'invention de rendre réglable la section de passage offerte par la bouche de la buse, par variation au moins de sa dimension suivant la drection du chemin de défilement des circuits imprimés.

Par le réglage de cette section de passage, on fait varier le degré d'étranglement que comporte ladite bouche. Cela permet, pour un débit donné de la soudure s'écoulant à travers la buse, d'ajuster la vitesse d'éjection de la soudure et, ainsi, de faire prendre à la vague un contour de forme optimale.

Selon l'invention, le réglage de la section de passage de la buse s'effectue de préférence par ajustement de l'angle que font entre elles les parois convergentes de la buse, et ce avantageusement à l'aide d'un moyen de réglage accessible à l'extérieur de la masse de soudure liquide, de façon que le réglage de la buse soit possible en toute circonstance, et notamment tandis qu'elle est en fonctionnement.

Dans une forme d'exécution avantageuse, l'une des parois de la buse est mobile et, en vue dudit réglage, déplaçable angulairement, par rapport à l'autre paroi, autour d'un axe de pivotement situé le long de son bord inférieur, lequel axe peut être défini par une zone flexible de la paroi mobile, le déplacement angulaire de ladite paroi s'effectuant grâce à la flexion de cette zone.

Le moyen de réglage peut alors être constitué par une came rotative agissant sur l'une des faces de la paroi mobile, cette dernière étant rappelée élastiquement contre ladite came. Afin de ne pas perturber l'écoulement de la soudure dans la buse, il convient que la came soit située à l'extérieur de celle-ci. D'une manière particulièrement simple, la force de rappel de la paroi mobile peut être fournie par sa zone contenant l'axe virtuel de pivotement, cette zone étant élastiquement flexible.

Il est connu, dans un dispositif du genre considéré, de faire s'écouler la soudure de la vague formée par la buse au moins partiellement vers l'aval sur un plateau se raccordant à la paroi arrière de la buse, offrant une orientation générale sensiblement horizontale et se terminant par un rebord par dessus lequel se déverse la soudure, la position de ce plateau étant réglable. Par un réglage convenable, on crée un courant régulier de soudure vers l'aval, de vitesse sensiblement égale à celle des circuits imprimés, ce qui évite l'apparition de "drapeaux" latéraux sur les queues des composants formés par des lambeaux du voile qui risque de se former à la surface de la soudure, ces drapeaux pouvant être la cause de courts-circuits entre composants.

Selon l'invention, en vue de permettre ce réglage, le plateau précité est articulé à la paroi arrière de la buse et est ajustable angulairement autour de son axe d'articulation à l'aide d'un moyen de réglage. Comme dans le cas de la buse, il convient que ce moyen de réglage soit accessible à l'extérieur de la masse de soudure liquide. Il peut de même être constitué par une came rotative, laquelle supporte le plateau. Dans le cas où la paroi arrière de la buse est sa paroi mobile, la structure est de préférence telle que le dièdre ayant pour arête l'axe d'articulation et défini par la ligne de contact de la came et du plateau et par l'axe de pivotement de la paroi mobile de la buse soit sensiblement droit. De cette façon, le réglage de la buse réagit peu sur celui du plateau en cause.

Par ailleurs, pour permettre la vidange de la soudure située sur ce plateau à l'arrêt du processus de soudage, on peut ménager, entre le plateau et la paroi de la buse à laquelle il est articulé, un jeu fonctionnel autorisant une légère fuite de la soudure liquide en direction du bac de réserve.

Lorsque, ainsi qu'il est habituellement prévu, la soudure de la vague formée par la buse s'écoule au moins partiellement vers l'amont, on peut disposer, en amont de la buse, un volet d'orientation sensiblement verticale formant, avec une surface de guidage du courant de soudure s'écoulant vers l'amont, un intervalle d'ouverture réglable dans lequel tombe ledit courant de soudure. Le réglage de la position de ce volet permet de faire varier l'étranglement offert par ladite ouverture et, par là, d'ajuster la vitesse avec laquelle ledit courant amont de soudure attaque la face inférieure des circuits imprimés et les queues de composants qui en font saillie. Il est possible ainsi de doser la force de blocage des queues de composants dans les circuits imprimés, ainsi que la dépression au sein de la soudure qui tend à retenir par succion le voile éventuellement présent à la surface de la masse métallique en fusion.

Avantageusement, le volet précité est mobile angulairement, par rapport à la surface de guidage, autour d'un axe de pivotement situé le long de son bord supérieur, et il est ajustable en orientation à l'aide d'un moyen de réglage, lequel est avantageusement accessible à l'extérieur de la masse de soudure liquide, tandis qu'il peut lui aussi être constitué par une came rotative, laquelle agit sur la face du volet opposée à la surface de guidage, le volet étant rappelé élastiquement contre la came. La force de rappel correspondante peut être fournie par une zone élastiquement flexible que possède le volet entre sa ligne de contact avec la came et son axe de pivotement, celui-ci étant matérialisé par une tige fixe dont est rendu solidaire le bord supérieur du volet.

La soudure circulant dans le dispositif est maintenue en fusion par des résistances chauffantes disposées à l'intérieur du bac de réserve. La température de la soudure formant la vague a toutefois tendance à s'abaisser par rapport à celle de la soudure contenue dans le bac. Pour éviter qu'elle ne descende à des valeurs risquant d'affecter la qualité du soudage, il convient de doter le dispositif, au voisinage de la bouche de la buse, d'un ou de plusieurs éléments chauffants auxiliaires pouvant réchauffer la soudure dans la région de la vague.

Afin de faciliter les opérations de nettoyage et d'entretien du dispositif de formation de la vague et du bac auquel il est associé, il est avantageux que ledit dispositif forme, avec la buse réglable et les autres éléments réglables éventuellement prévus, ainsi que le ou les moyens de réglage correspondants, et avec le ou les éléments chauffants auxiliaires dont il est éventuellement doté, une unité structurelle montée de façon amovible sur le bac de réserve de soudure.

D'autres caractéristiques et avantages de l'invention ressortiront plus clairement de la description qui va suivre, en regard des dessins annexés, d'un exemple de réalisation non limitatif.

La figure 1 représente, en coupe par un plan vertical parallèle à la direction de défilement des circuits imprimés, un dispositif selon l'invention monté sur le bac à soudure d'une machine de soudage à la vague.

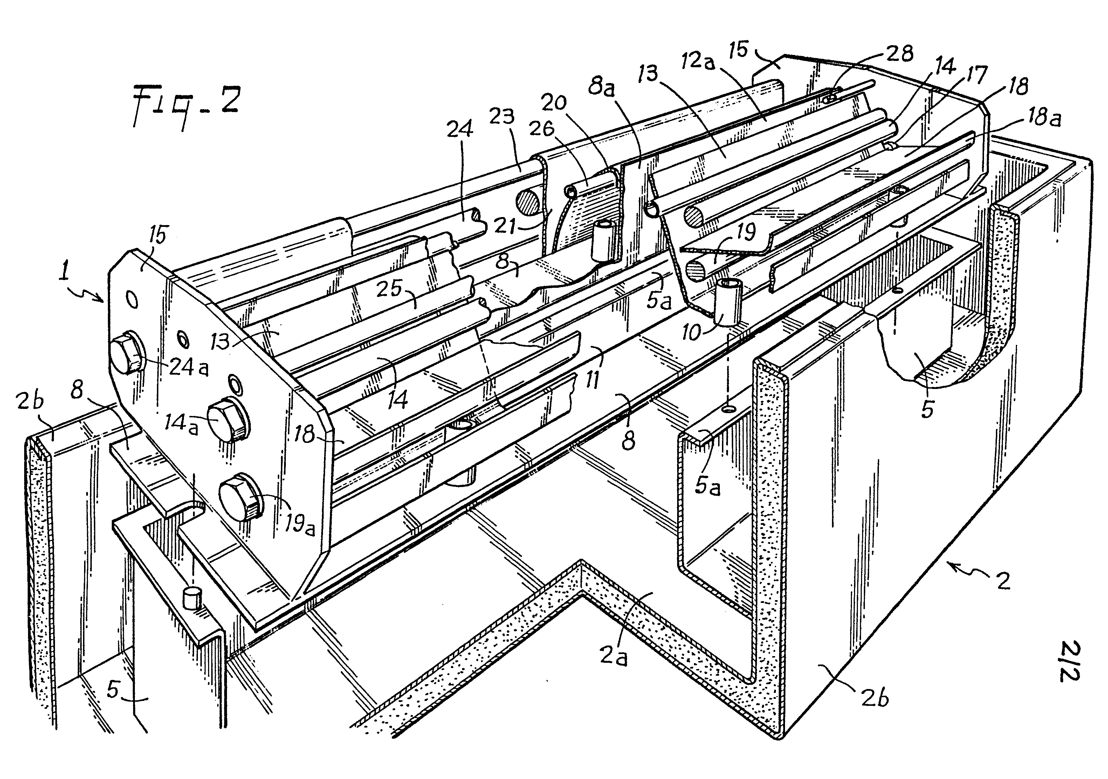

La figure 2 montre, en perspective avec arrachements, le dispositif de la figure 1 présenté au-dessus du bac à soudure.

On voit sur les figures un dispositif 1 conçu pour créer une vague de soudure liquide dans une machine de soudage à la vague de circuits imprimés. Ce dispositif constitue un ensemble unitaire qui est monté sur un bac 2 d'alimentation en soudure liquide. Le bac 2, dont le fond 2a et les parois 2b sont calorifugés, est équipé, de manière connue, de résistances électriques chauffantes (non représentées) assurant la mise en fusion de la masse de soudure 4 qu'il contient, et d'une pompe (également non représentée) pour refouler la soudure liquide, avec un débit déterminé, via un conduit 5 vers le dispositif 1. Ce dernier, ainsi alimenté, donne naissance à une vague de soudure 6 qui vient lécher le dessous des circuits imprimés défilant au-dessus du dispositif 1 suivant un chemin rectiligne 7 légèrement ascendant. La soudure, mouillant les parties métallisées des circuits imprimés et les queues des composants qui ont été préalablement disposés sur lesdits circuits, en assure le soudage mutuel. Le dispositif 1 et son conduit d'alimentation 5 s'étendent, transversalement à la direction de défilement des circuits imprimés, sur toute la largeur du chemin que ceux-ci suivent.

Le dispositif 1 comprend une plaque de base 8 qui se fixe sur un rebord sommital 5a du conduit 5 au moyen de vis 9 prenant place dans des entretoises tubulaires 10 soudées à ladite plaque. Cette dernière comporte sur presque toute sa longueur un large crevé 11, la partie correspondante 8a de la plaque étant repliée vers le haut à 90° pour former l'une des parois d'une buse 12 dont l'autre paroi est constituée par une plaque 13 fixée à la plaque 8 et disposée en regard de la paroi 8a. La buse 12, recevant du conduit 5 le courant de soudure via le crevé 11, engendre la vague de soudure 6.

Si la paroi avant 8a de la buse 12 (suivant le sens de défilement F des circuits imprimés), plane, est verticale, sa paroi arrière 13, également plane, est oblique, allant en se rapprochant de la paroi 8a de sa base à son sommet, de sorte que la buse 12 est une buse convergente offrant une bouche 12a de largeur inférieure à la largeur du crevé 11. On constate de plus que la direction moyenne de la buse 12 est orientée vers le côté d'où arrivent les circuits imprimés suivant la flèche F.

Tandis que la paroi avant 8a de la buse 12 est fixe en situation verticale, l'orientation oblique de la paroi arrière 13 est réglable. Cette paroi est constituée par une feuille élastiquement déformable, soudée à plat sur la plaque 8 et se redressant vers le haut dans une zone incurvée 13a pour former la paroi proprement dite de la buse 12. Cette paroi s'appuie élastiquement, par sa face opposée à la paroi, contre une came 14 qui s'étend à l'extérieur de la buse, sur la longueur de celle-ci, entre deux joues latérales 15 soudées verticalement aux extrémités de la plaque 8. Au moyen d'une tête hexagonale 14a disposée à l'extérieur de l'une des joues 15, on peut faire tourner la came 14 autour de son axe longitudinal excentré et, ainsi, régler la position angulaire de la paroi 13 autour d'un axe de pivotement virtuel correspondant à sa zone incurvée 13a. Ce réglage permet de rétrécir plus ou moins la section de passage de la bouche 12a de la buse 12.

Sur la paroi arrière 13 de la buse 12 sont fixés, à peu près à mi-hauteur, des organes 17 d'articulation d'un plateau 18 qui s'étend vers l'aval de la buse en reposant sur une came 19 et se termine par un rebord relevé 18a. Ce plateau reçoit une partie de la soudure qui a formé la vague 6, ce courant de soudure dirigé vers l'aval se déversant par-dessus le rebord 18a pour retomber dans le bac 2. Par manoeuvre d'une tête hexagonale 19a disposée de la même manière que la tête 14a de la came 14, on peut faire varier l'orientation du plateau 18 autour de son axe d'articulation défini par les organes 17, donc le niveau de l'arête supérieure de déversement du rebord 18a et, par là, la vitesse du courant partiel de soudure en cause.

Pour minimiser les interactions du réglage de la buse 12 sur celui du plateau 18, la disposition des éléments est choisie telle que la partie du plateau reposant sur la came 19 est sensiblement perpendiculaire au plan de la paroi mobile 13 de la buse, de sorte que, lors d'un réglage de la buse, cette partie du plateau se déplace sensiblement suivant son propre plan.

La majeure partie de la soudure issue de la vague 6 s'écoule vers l'amont sur une plaque 20 incurvée suivant un profil convexe et fixée, avec possibilité de démontage, au bord supérieur de la paroi avant de la buse. En regard de cette plaque 20 fixe est prévu un volet 21 sensiblement vertical qui forme avec elle un intervalle 22 de réception dudit courant de soudure. Afin de pouvoir modifier la vitesse d'écoulement de ce dernier, cet intervalle est rendu réglable par variation de l'orientation du volet 21. A cet effet, ce dernier, fait d'une feuille élastiquement déformable, est soudé le long de son bord supérieur à une tige fixe 23, assujettie par encastrement dans les joues 15, et il s'appuie élastiquement contre une came 24, semblable aux cames 14 et 19 et agencée de la même manière, qui peut être actionnée en rotation au moyen d'une tête hexagonale 24a terminale, voisine des têtes 14a et 19a des deux autres cames.

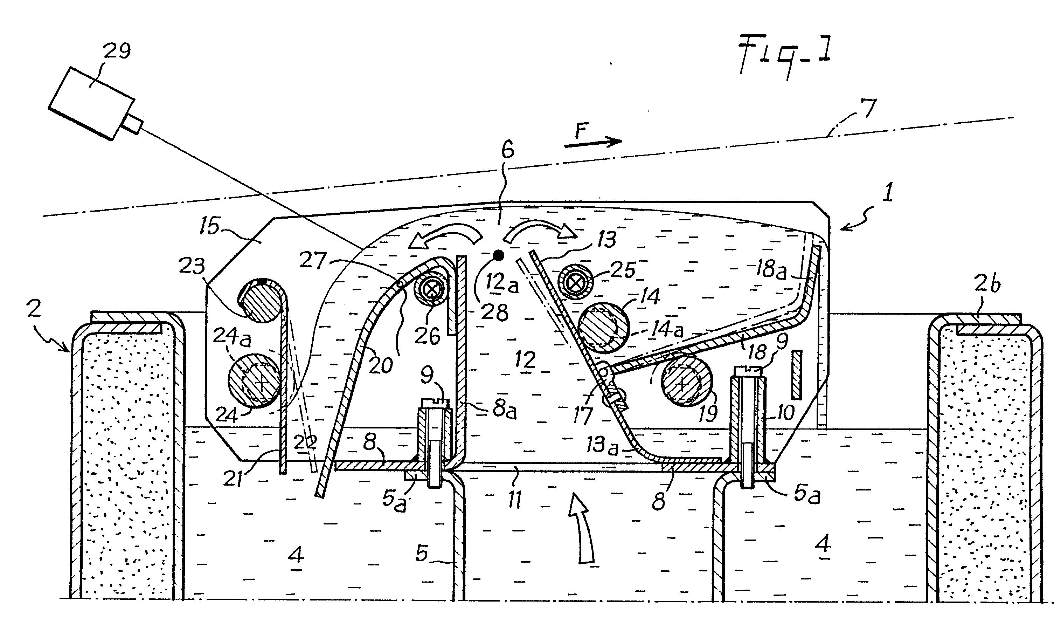

Comme le montre la figure 1, la came 14 baigne dans là soudure liquide, tandis que les cames 19 et 24 sont situées hors de la masse de soudure. Elles peuvent cependant toutes trois être commandées tandis que le dispositif est en service pour créer la vague de soudure 6, autrement dit durant le fonctionnement de la machine de soudage.

Le dispositif 1 est d'autre part muni de deux résistances blindées 25, 26 s'étendant entre les joues 15 au voisinage de la bouche 12a de la buse. Ces résistances ont pour but de réchauffer la soudure dans la région de la vague 6 où elle est sujette à d'importantes déperditions de chaleur. La température peut y être contrôlée soit par une sonde thermométrique 27 ou 28, soit par un pyromètre infrarouge 29, commandant l'alimentation électrique des résistances 25, 26 via un circuit d'asservissement.

## REVENDICATIONS

1. Dispositif de génération d'une vague de soudure pour machine de soudage à la vague de composants disposés sur des circuits imprimés supports défilant à travers la machine, ce dispositif étant équipé d'une buse qui comprend une chambre de forme allongée à parois convergentes et une bouche s'ouvrant à son sommet et s'étendant au-dessous du chemin de défilement des circuits imprimés, sur toute la largeur de celui-ci, cette buse, reliée à un bac d'alimentation en soudure liquide, étant susceptible d'émettre un courant ascendant de soudure formant une vague qui vient lécher la face inférieure des circuits imprimés et les queues de composants qui en font saillie, caractérisé par le fait que la section de passage offerte par ladite bouche (12a) est réglable par variation au moins de sa dimension suivant la direction du chemin de défilement (7) des circuits imprimés.

2. Dispositif selon la revendication 1, caractérisé par le fait que le réglage de la section de passage s'effectue par ajustement de l'angle que font entre elles les parois convergentes (8a, 13) de la buse (12).

3. Dispositif selon la revendication 2, caractérisé par le fait que l'ajustement dudit angle s'effectue à l'aide d'un moyen de réglage accessible à l'extérieur de la masse de soudure liquide.

4. Dispositif selon la revendication 2 ou 3, caractérisé par le fait que l'une des parois de la buse (12) est mobile et déplaçable angulairement par rapport à l'autre paroi autour d'un axe de pivotement situé le long de son bord inférieur.

5. Dispositif selon la revendication 4, caractérisé par le fait que l'axe de pivotement de la paroi mobile (13) de la buse est défini par une zone flexible (13a) de cette paroi, le déplacement angulaire de ladite paroi s'effectuant grâce à la flexion de cette zone.

6. Dispositif selon la revendication 4 ou 5, caractérisé par le fait que le moyen de réglage est constitué par une came rotative (14) agissant sur l'une des faces de la paroi mobile (13), cette dernière étant rappelée élastiquement contre ladite came.

7. Dispositif selon la revendication 6, caractérisé par le fait que la came (14) est située à l'extérieur de la buse (12).

8. Dispositif selon la revendication 6 ou 7, caractérisé par le fait que la force de rappel de la paroi mobile (13) de la buse (12) est fournie par sa zone (13a) contenant l'axe virtuel de pivotement, cette zone étant élastiquement flexible.

9. Dispositif selon l'une quelconque des revendications précédentes, dans lequel la soudure de la vague formée par la buse s'écoule au moins partiellement vers l'aval sur un plateau se raccordant à la paroi arrière de la buse, offrant une orientation générale sensiblement horizontale et se terminant par un rebord par-dessus lequel se déverse la soudure, la position de ce plateau étant réglable,
caractérisé par le fait que le plateau (18) est articulé à la paroi arrière (13) de la buse (12) et est ajustable angulairement autour de son axe d'articulation à l'aide d'un moyen de réglage.

10. Dispositif selon la revendication 9, caractérisé par le fait que le moyen de réglage est accessible à l'extérieur de la masse de soudure liquide.

11. Dispositif selon la revendication 9 ou 10, caractérisé par le fait que le moyen de réglage est constitué par une came rotative (19) supportant le plateau (18).

12. Dispositif selon la revendication 11, caractérisé par le fait que la paroi arrière (13) de la buse est sa paroi mobile et que le dièdre ayant pour arête l'axe d'articulation du plateau (18) et défini par la ligne de contact de la came (19) et du plateau (18) et par l'axe de pivotement de la paroi mobile (13) de la buse est sensiblement droit.

13. Dispositif selon l'une quelconque des revendications 9 à 12, caractérisé par le fait qu'entre le plateau (18) et la paroi (13) de la buse (12) à laquelle il est articulé est ménagé un jeu fonctionnel autorisant une légère fuite de la soudure liquide.

14. Dispositif selon l'une quelconque des revendications précédentes, dans lequel la soudure de la vague formée par la buse s'écoule au moins partiellement vers l'amont, caractérisé par le fait que, en amont de la buse (12), est prévu un volet (21) d'orientation sensiblement verticale formant, avec une suface (20) de guidage du courant de soudure s'écoulant vers l'amont, un intervalle (22) d'ouverture réglable dans lequel tombe ledit courant de soudure.

15. Dispositif selon la revendication 14, caractérisé par le fait que le volet (21) est mobile angulairement, par rapport à la surface de guidage (20), autour d'un axe de pivotement situé le long de son bord supérieur, et qu'il est ajustable en orientation à l'aide d'un moyen de réglage.

16. Dispositif selon la revendication 15, caractérisé par le fait que le moyen de réglage est accessible à l'extérieur de la masse de soudure liquide.

17. Dispositif selon la revendication 15 ou 16, caractérisé par le fait que le moyen de réglage est constitué par une came rotative (24) agissant sur la face du volet (21) opposée à la surface de guidage (20), le volet étant rappelé élastiquement contre la came.

18. Dispositif selon la revendication 17, caractérisé par le fait que la force de rappel du volet (21) est fournie par une zone élastiquement flexible qu'il possède entre sa ligne de contact avec la came (24) et son axe de pivotement, celui-ci étant matérialisé par une tige (23) fixe dont est rendu solidaire le bord supérieur du volet.

19. Dispositif selon l'une quelconque des revendications précédentes, caractérisé par le fait qu'il est doté, au voisinage de la bouche (12a) de la buse (12), d'un ou de plusieurs éléments chauffants auxiliaires (25, 26) pouvant réchauffer la soudure dans la région de la vague (6).

20. Dispositif selon l'une quelconque des revendications précédentes, caractérisé par le fait qu'il forme, avec la buse réglable (12) et les autres éléments réglables éventuels (18, 21), ainsi que le ou les moyens de réglage correspondants, et avec le ou les éléments chauffants auxiliaires (25, 26) dont il est éventuellement doté, une unité structurelle (1) montée de façon amovible sur le bac (2) de réserve de soudure.

Fig. 1

Fig-2

Office européen
des brevets

**RAPPORT DE RECHERCHE EUROPEENNE**

**0187555**
Numéro de la demande

EP 85 40 2210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 465 219 (KONDO)<br>* Colonne 2, ligne 34 - colonne 5, ligne 16; figures 1-4 * | 1 | B 23 K 1/08 |
| A |  | 3 |  |
|  | --- |  |  |
| A | US-A-3 119 363 (RIEBEN)<br>* Colonne 2, ligne 46 - colonne 4, ligne 15; figures 1-6 * | 1 |  |
|  | --- |  |  |
| A | PATENTS ABSTRACTS OF JAPAN, vol. 6, no. 246 (M-176) [1124], 4 décembre 1982; & JP -A - 57 142 766 (SONY K.K.) 03.09.1982 | 9 |  |
|  | ----- |  |  |

DOMAINES TECHNIQUES
RECHERCHES (Int. Cl.4)

B 23 K
H 05 K

Le présent rapport de recherche a été établi pour toutes les revendications

| Lieu de la recherche | Date d'achèvement de la recherche | Examinateur |
|---|---|---|
| LA HAYE | 27-02-1986 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82